(19) Europäisches Patentamt
European Patent Office
Office européen des brevets

(11) **EP 4 198 915 A1**

(12) **DEMANDE DE BREVET EUROPEEN**

(43) Date de publication:
**21.06.2023 Bulletin 2023/25**

(21) Numéro de dépôt: **21306790.3**

(22) Date de dépôt: **16.12.2021**

(51) Classification Internationale des Brevets (IPC):
**G06V 10/82** (2022.01)   **G06V 20/52** (2022.01)
**G06V 40/16** (2022.01)   **G06V 10/74** (2022.01)
**G06V 10/98** (2022.01)

(52) Classification Coopérative des Brevets (CPC):
**G06V 10/82; G06V 10/761; G06V 10/993;
G06V 20/52; G06V 40/173**

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**
Etats d'extension désignés:
**BA ME**
Etats de validation désignés:
**KH MA MD TN**

(71) Demandeur: **Bull SAS
78340 Les Clayes-sous-Bois (FR)**

(72) Inventeurs:
• **OSPICI, Matthieu
  38000 GRENOBLE (FR)**
• **MORIN, Guillaume
  38000 GRENOBLE (FR)**

(74) Mandataire: **IPAZ
Bâtiment Platon
Parc Les Algorithmes
91190 Saint-Aubin (FR)**

(54) **PROCÉDÉ DE RÉ-IDENTIFICATION D'OBJET, DISPOSITIF ET SYSTÈME DE RÉ-IDENTIFICATION D'OBJETS METTANT EN ŒUVRE UN TEL PROCÉDÉ**

(57)    L'invention concerne un procédé (100) de ré-identification d'objet(s) sur des images prises par une ou plusieurs caméras, ledit procédé (100) comprenant :
- une phase (108) de filtrage desdites images comprenant les étapes suivantes :

▪ calcul (110) d'un score de qualité ($QS_i$) pour chaque image, et

▪ conservation (112) de chaque image dont le score satisfait un seuil de qualité prédéterminé ; et

-une phase (114) de ré-identification d'objet(s) sur les images conservées lors de ladite phase de filtrage.

Elle concerne également un programme d'ordinateur, un dispositif de ré-identification d'objets et un système de ré-identification d'objets mettant en œuvre un tel procédé.

FIG. 1

EP 4 198 915 A1

# Description

La présente invention concerne un procédé de ré-identification d'objet sur des images prises par au moins une caméra. Elle concerne également un programme d'ordinateur, un dispositif et un système mettant en oeuvre un tel procédé de ré-identification.

Le domaine de l'invention est de manière générale le domaine de la ré-identification d'objets dans des images prises par une ou plusieurs caméras, et plus particulièrement le domaine de la ré-identification de personnes dans des images prises par plusieurs caméras.

## État de la technique

Dans de nombreux domaines, il est très utile de pouvoir reconnaître automatiquement une personne, et plus généralement un objet, à travers d'images ou de vidéos, fournies par différentes caméras. De manière générale,

De manière résumée, une ré-identification d'objet est réalisée de la manière suivante. Un objet est détecté sur une première image fournie par une première caméra et une première signature est calculée pour cette personne, par exemple par un réseau de neurones préalablement entrainé, et en particulier un réseau de neurones à apprentissage profond tel que Resnet50 par exemple. Ensuite, un objet est détecté sur une deuxième image fournie par une deuxième caméra et une deuxième signature est calculée pour objet par le même réseau de neurones. Puis, une distance est calculée entre les première et deuxième signatures, telle qu'une distance cosinus ou une distance euclidienne. Cette distance est comparée à un seuil prédéterminé, appelé seuil de ré-identification dans la présente demande, pour décider si les objets détectés sur les deux images sont en réalité le même objet, ou non.

Les images utilisées pour la ré-identification d'objets peuvent présenter de grandes variations dues à la pose, la luminosité, l'angle de vue ou l'arrière-plan, ce qui rend la ré-identification être extrêmement difficile. De plus, en condition réelle les images traitées n'ont pas forcément la même qualité que celles des images d'entrainement. Tous ces éléments dégradent les performances de ré-identification des modèles de ré-identification sur des images réelles, alors même qu'ils présentent de bonnes performances sur des images d'entrainement.

Un but de la présente invention est de remédier à au moins un des inconvénients de l'état de la technique.

Un autre but de l'invention est de proposer une solution ré-identification d'objets plus performante en conditions réelles.

## Exposé de l'invention

L'invention propose d'atteindre au moins l'un des buts précités par un procédé de ré-identification d'objet(s) sur des images prises par au moins une caméra, ledit procédé comprenant :

- une phase de filtrage desdites images comprenant les étapes suivantes :

  ▪ calcul d'un score de qualité pour chaque image,
  ▪ conservation de chaque image dont le score satisfait un seuil de qualité prédéterminé ; et

- une phase de ré-identification d'objet(s) sur les images conservées lors de ladite phase de filtrage.

Ainsi, l'invention propose de filtrer les images utilisées pour la ré-identification en fonction de la qualité de ces images de sorte à éliminer les images qui ne vérifient pas une qualité suffisante. Le filtrage des images est réalisé en fonction d'un score de qualité déterminée pour chaque image. Ainsi, l'invention permet de réaliser une ré-identification d'objets basée uniquement sur des images de bonne qualité qui comportent suffisamment d'informations pour la ré-identification. Par conséquent, l'invention permet de réaliser une ré-identification d'objet plus performante que les solutions actuelles, sur un flux d'images.

De plus, l'invention propose d'éliminer les images qui ne présentent pas la qualité suffisante pour la ré-identification d'objets, de sorte que ces images de mauvaise qualité ne sont pas traitées pour la ré-identification. Ainsi, l'invention permet d'économiser le temps et les ressources informatiques et énergétiques qui seraient utilisées pour le traitement de ces images, alors même que ces images ne sont pas pertinentes pour la ré-identification.

Dans la présente demande par « ré-identification d'objet » dans des images, on entend une ré-identification de tout type d'objets tels que des personnes, des animaux, des voitures, etc. dans des images fournies par une ou plusieurs caméras.

Suivant des modes de réalisation, pour au moins une image, l'étape de calcul de score de qualité peut comprendre un calcul d'un score de netteté en fonction de la netteté de ladite image, le score de qualité de l'image étant fonction dudit score de netteté.

Ainsi, l'invention permet de prendre en compte la netteté d'une image dans le calcul du score de qualité de l'image, de sorte que si l'image présente une netteté faible alors elle aura une qualité faible pouvant entrainer l'élimination de ladite image de sorte qu'elle ne sera pas considérée lors de la ré-identification d'objets. En effet, une image de faible netteté ne permet pas de réaliser une ré-identification efficace.

Le score de qualité peut correspondre, ou être fonction, uniquement du score de netteté. Alternativement, le score de qualité peut être fonction dudit score de netteté et d'au moins un autre score, ou une autre caractéristique.

Suivant des exemples de réalisation non limitatifs, pour au moins une image, le score de netteté peut correspondre à, ou être fonction de, une moyenne des normes du gradient de ladite image.

Suivant des modes de réalisation, pour une image, notée $IM_i$, le score de netteté de ladite image, notée $SS_i$, peut être calculée suivant la formule suivante :

$$SS_i = log_{10}(1 + S_i)$$

avec $S_i$ la moyenne des normes du gradient de l'image $IM_i$.

Suivant des modes de réalisation, pour au moins une image, l'étape de calcul de score de qualité peut comprendre un calcul d'un score de confiance basé sur une visibilité, dans ladite image, de point(s) clef(s) visuels, le score de qualité de l'image étant fonction dudit score de confiance.

Ainsi, l'invention permet de prendre en compte la visibilité ou non, dans ladite image, de tel ou tel point clef, ou de telle ou telle caractéristique de l'objet, ou encore de tel ou tel attribut visuel de l'objet, nécessaire la ré-identification d'objets. Si l'image ne comporte pas ce(s) point(s) clef(s), il est fort probable que le traitement de l'image ne permette pas ré-identifier un objet sur ladite image. En effet, si l'image ne comporte pas suffisamment d'éléments relatifs à l'aspect visuel, ou à la composition visuelle, de l'objet alors elle risque de ne pas comporter suffisamment d'information pour la ré-identification d'objets et don d'être inutile pour la ré-identification.

Le score qualité peut correspondre, ou être fonction, uniquement du score de confiance. Alternativement, le score de qualité peut être fonction dudit score de confiance et d'au moins un autre score, ou une autre caractéristique, tel que par exemple le score de netteté décrit plus haut.

Au moins un point clef peut être préalablement défini pour une catégorie d'objet. Par exemple, au moins un point clef peut être défini pour la catégorie « personne humaine », « animal », « véhicule », etc.

Au moins un point clef peut correspondre à une silhouette de l'objet, ou un attribut visuel de l'objet. Au moins un clef point clef peut correspondre à une silhouette de l'objet.

Préférentiellement, mais de manière nullement limitative, au moins un point clef peut correspondre à une partie de la silhouette, ou de la forme, de l'objet.

Par exemple, lorsque la ré-identification concerne des personnes humaines, au moins un point clef peut correspondre à une partie de la silhouette d'une personne, tel que les yeux, le nez, la bouche, etc.

Pour au moins une image, la détection d'au moins un point clef peut être réalisée par un détecteur de point(s) clef(s) préalablement entrainé.

Un tel détecteur de point clef peut être un modèle de deep learning, tel que par exemple un réseau de neurones à apprentissage profond préalablement entrainé.

Par exemple, lorsque la ré-identification concerne les personnes, le détecteur de point clef peut être entrainé la base d'apprentissage COCO (pour « Common Object in COntext » en anglais).

Suivant un exemple de réalisation, lorsque la ré-identification concerne les personnes, le détecteur de point clef peut concerner dix-sept points clés tels que des yeux, le nez, la bouche, les épaules, etc. de la silhouette humaine.

Suivant des modes de réalisation, le détecteur de point clef peut fournir un score de confiance pour chaque point clef. Le score de confiance de l'image peut être calculée en fonction du score de confiance fourni par le détecteur pour chaque point clef.

Suivant des modes de réalisation, pour une image, notée $IM_i$, le score de confiance de ladite image, notée $CS_i$, peut être calculée suivant la formule suivante :

$$CS_i = \frac{\sum_{j=1}^{k} a_j\, m_j}{\sum_{j=1}^{k} a_j}$$

avec :

- $m_j$ le score de confiance calculé pour le point clef j, parmi k points clefs, avec $k \geq 1$ ; et
- $a_j$ un coefficient de pondération prédéterminé pour le point clef j.

Suivant des modes de réalisation, pour une image, notée $IM_i$, le score de qualité de ladite image, notée $QS_i$, peut être calculé suivant la formule suivante :

$$QS_i = CS_i + SS_i$$

Ainsi, en prenant en compte les exemples non limitatifs donnés plus haut pour le score de netteté et pour le score de confiance, on a :

$$QS_i = \frac{\sum_{j=1}^{k} a_j\, m_j}{\sum_{j=1}^{k} a_j} + log_{10}(1 + S_i)$$

Suivant des modes de réalisation, au moins une, en particulier chaque, image peut correspondre à une zone d'une image source, comprenant un objet et extraite de ladite image source lors d'une étape de détection réalisée préalablement à la phase de filtrage.

Dans ce cas, le procédé selon l'invention peut comprendre, préalablement à la phase de filtrage, et pour au moins une image source, une étape de détection dans ladite image source, d'une zone d'image comprenant un objet. Cette zone d'image constitue l'image donnée en entrée de la phase de filtrage.

Suivant des modes de réalisation, pour au moins une image, l'étape de détection peut être réalisée par toute technique connue de l'Homme du Métier.

Suivant un exemple de réalisation non limitatif, la détection d'une, préférentiellement de chaque, zone d'image comprenant un objet peut être réalisée par un détecteur d'objet de type Yolov5, par exemple décrit à la page suivante : https://pytorch.org/hub/ultralytics yolov5/.

Suivant des modes de réalisation, la phase de ré-identification peut comprendre les étapes suivantes, pour au moins une image :

- calcul, par un générateur de signature préalablement entrainé, d'une signature pour ladite image,
- calcul d'une distance entre ladite signature et une signature d'au moins une autre image, et
- comparaison de ladite distance à un seuil de ré-identification pour déterminer si lesdites images comprennent le même objet.

Suivant des modes de réalisation, le générateur de signature peut comprendre un réseau de neurones préalablement entrainé.

Le réseau de neurones peut être un réseau de neurones à apprentissage profond, un réseau de neurones convolutif, etc. En particulier, le réseau de neurones peut être un CNN (« Convolutional Neural Network »), de type Resnet50 par exemple.

Le réseau de neurones peut comprendre 50 couches.

Le réseau de neurones peut être entrainé par un algorithme de retropropagation du gradient sur une base d'entrainement comprenant une multitude d'images pour lesquels la nature de l'objet qu'elles contiennent est annotée et renseignée au réseau de neurones.

Suivant un mode de réalisation, le procédé selon l'invention peut être appliqué à la ré-identification de personnes.

Alternativement, le procédé selon l'invention peut être appliqué à la ré-identification d'animaux, ou de tout autre objet tel que des véhicules, etc.

Selon un autre aspect de l'invention, il est proposé un programme d'ordinateur comprenant des instructions exécutables qui, lorsqu'elles sont exécutées par un appareil informatique, mettent en en oeuvre toutes les étapes du procédé de calibration selon l'invention.

Le programme d'ordinateur peut être en tout langage informatique, tel que par exemple en langage machine, en C, C++, JAVA, Python, etc.

Selon un autre aspect de l'invention, il est proposé un dispositif de calibration comprenant des moyens configurés pour mettre en oeuvre toutes les étapes du procédé de calibration selon l'invention.

Le dispositif de calibration peut être tout type d'appareil tel qu'un serveur, un ordinateur, une tablette, un calculateur, un processeur, une puce informatique, programmé pour mettre en oeuvre le procédé de calibration selon l'invention, par exemple par le programme d'ordinateur selon l'invention.

Selon un autre aspect de l'invention, il est proposé un système de ré-identification d'objet comprenant :

- au moins une caméra pour prendre des images, et
- un dispositif selon l'invention pour ré-identifier des objets sur les images prises par ladite au moins une caméra.

Le système selon l'invention peut être utilisé pour la ré-identification de personne(s) sur des images fournies par une ou plusieurs caméras.

Le système selon l'invention peut être utilisé pour la ré-identification d'objet(s) non humain(s), tel qu'une voiture, sur des images.

**Description des figures et modes de réalisation**

D'autres avantages et caractéristiques apparaîtront à l'examen de la description détaillée de modes de réalisation nullement limitatifs, et des dessins annexés sur lesquels :

- la FIGURE 1 est une représentation schématique d'un exemple de réalisation non limitatif d'un procédé de ré-identification selon l'invention ;
- la FIGURE 2 est une représentation schématique d'un exemple de réalisation non limitatif d'une étape de calcul de score de qualité pour une image pouvant être mise en oeuvre dans la présente invention ;
- la FIGURE 3 est une représentation schématique d'un exemple de réalisation non limitatif d'un dispositif de ré-identification selon l'invention ; et
- la FIGURE 4 est une représentation schématique d'un exemple de réalisation non limitatif d'un système de ré-identification selon l'invention.

Il est bien entendu que les modes de réalisation qui seront décrits dans la suite ne sont nullement limitatifs. On pourra notamment imaginer des variantes de l'invention ne comprenant qu'une sélection de caractéristiques décrites par la suite isolées des autres caractéristiques décrites, si cette sélection de caractéristiques est suffisante pour conférer un avantage technique ou pour différencier l'invention par rapport à l'état de la technique antérieure. Cette sélection comprend au moins une caractéristique de préférence fonctionnelle sans détails structurels, ou avec seulement une partie des détails structurels si c'est cette partie qui est uniquement suffisante pour conférer un avantage technique ou pour différencier l'invention par rapport à l'état de la technique antérieure.

En particulier toutes les variantes et tous les modes de réalisation décrits sont combinables entre eux si rien ne s'oppose à cette combinaison sur le plan technique.

Sur les figures et dans la suite de la description, les éléments communs à plusieurs figures conservent la même référence.

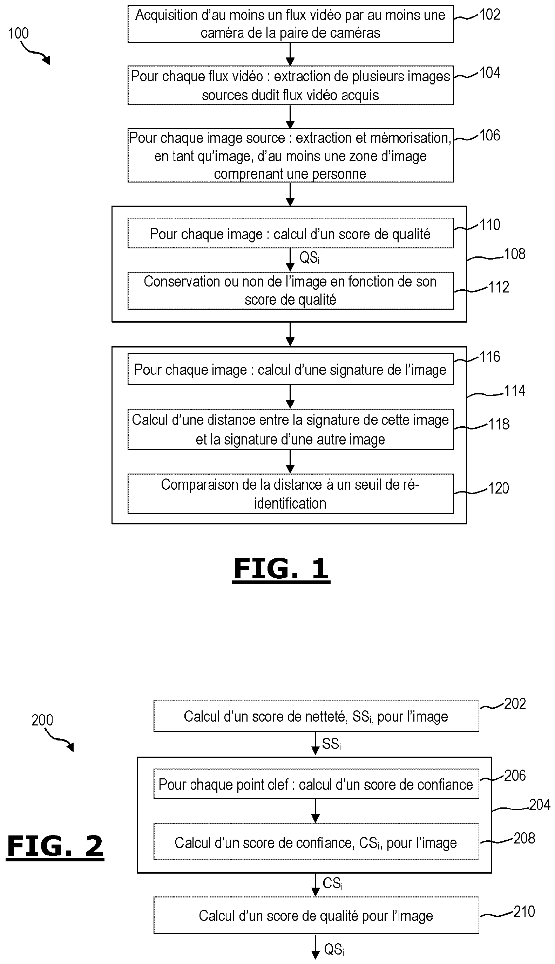

La FIGURE 1 est une représentation schématique d'un exemple de réalisation non limitatif d'un procédé de ré-identification selon la présente invention.

Le procédé 100 de la FIGURE 1 peut être utilisé pour la ré-identification d'objets ou de personnes sur des images. On considère dans la suite que la ré-identification concerne des personnes, sans perte de généralité.

Le procédé 100 utilise une ou plusieurs caméras configurées pour capter un flux vidéo servant à la ré-identification, telles que des caméras de surveillance par exemple.

Le procédé 100 comprend une étape 102 lors de laquelle au moins un flux vidéo d'une durée prédéterminée, par exemple de 20 minutes, est capté par l'au moins une caméra.

Lors d'une étape 104, plusieurs images, dites images sources, sont extraites de chaque flux vidéo. Par exemple, une image source est extraite toutes les 5 secondes, ce qui, pour un flux vidéos de 20 minutes, fournit 240 images sources pour ledit flux vidéo.

Lors d'une étape 106, chaque image source est analysée pour y détecter des personnes, par exemple par un détecteur de type YOLOV5. Ainsi, par exemple, pour au moins une image source au moins une zone d'image est fournie, ladite zone d'image comportant une personne. Les zones d'image détectées et extraites des images sources sont mémorisées en tant qu'image à traiter pour la suite et sont appelées « image ».

Le procédé comprend ensuite une phase 108 de filtrage des images, c'est-à-dire des zones de personnes, détectées et mémorisés lors de l'étape 106.

Cette phase de filtrage 108 comprend une étape 110 de calcul d'un score de qualité pour chaque image. Un exemple non limitatif de calcul de score de qualité est décrit dans la suite en référence à la FIGURE 2.

Lors d'une étape 112, le score de qualité de chaque image est comparé à un seuil de qualité prédéterminé. Si le score de qualité de l'image satisfait le seuil de qualité alors l'image est conservée et sera utilisée dans la suite du procédé, et en particulier pour la ré-identification de personnes. Dans le cas contraire, l'image n'est pas conservée et ne sera pas utilisé dans la suite du procédé pour la ré-identification de personnes.

La phase de filtrage 108 fournit les images qui seront utilisées dans la suite lors d'une phase de ré-identification. Ces images sont celles qui satisfont une qualité minimale parmi toutes les images détectées et mémorisées lors de l'étape 106. Autrement dit, les images qui présentent une qualité insuffisante pour la ré-identification sont éliminées et ne sont pas utilisées pour la ré-identification.

Le procédé 100 comprend ensuite une phase 114 de ré-identification, classique, utilisant les images conservées à l'issue de la phase de filtrage 108.

La phase de ré-identification 114 comprend, pour chaque image conservée, une étape 116 de génération d'une signature numérique, ou alphanumérique, par un générateur de signature préalablement entrainé. Le générateur de signature peut être un réseau de neurones à apprentissage profond, tel que par exemple Resnet50 par exemple, préalablement entrainé avec un algorithme d'apprentissage, tel que par exemple l'algorithme de retropropagation du gradient, sur une base d'entrainement comprenant une multitude d'images, tel que par exemple la base COCO.

Lors d'une étape 118, une distance est calculée entre les signatures d'au moins deux images pour déterminer si les personnes apparaissant sur ces images sont la même personne ou non.

Lors d'une étape 120 la distance calculée à l'étape 118 est comparée à une valeur seuil, appelée seuil de ré-identification. Si la distance calculée entre deux images est inférieure ou égale audit seuil de ré-identification, alors les personnes apparaissant sur les deux images sont la même personne. Dans le cas contraire, les personnes apparaissant sur les deux images sont des personnes différentes.

Par exemple, la phase 114 peut être réalisée pour toutes les images, considérées deux à deux.

La FIGURE 2 est une représentation schématique d'un exemple de réalisation non limitatif d'une étape de calcul de score de qualité d'une image, pouvant être mise en oeuvre dans la présente invention.

L'étape 200 de la FIGURE 2 peut être mis en oeuvre dans un procédé de ré-identification selon l'invention, et en particulier dans le procédé 100 de la FIGURE 1. En particulier, l'étape 200 peut être l'étape 110 du procédé de la FIGURE 1.

L'étape 200 de la FIGURE 2 comprend, pour l'image, notée $IM_i$, une étape 202 de calcul d'un score de netteté, noté $SS_i$. Suivant un exemple de réalisation non limitatif, le score de netteté peut être calculé en fonction d'une moyenne des normes du gradient de ladite image, ou encore peut être égale à ladite moyenne. Par exemple, le score de netteté peut être calculée suivant la formule suivante :

$$SS_i = log_{10}(1 + S_i)$$

avec $S_i$ la moyenne des normes du gradient de l'image $IM_i$.

L'étape 200 comprend une étape 204 de calcul d'un score de confiance basé sur une visibilité ou non, dans ladite image, de points clefs visuels, préalablement définis. Par exemple, dans le cas d'une personne chaque point clef peut correspondre à une partie de la silhouette humaine, telle que les yeux, le nez, la bouche, etc.

Pour ce faire, l'étape 204 comprend, pour chaque point clef, une étape 206 de détermination d'un score de confiance par un détecteur de points clefs. Par exemple, le détecteur de point clef donne un premier score de confiance sur le fait qu'un nez apparait sur l'image, un deuxième score de confiance sur le fait des yeux apparaissent sur l'image, etc.

Le détecteur de point clef peut être un réseau de neurones, tel que par exemple un réseau de neurones à apprentissage profond, préalablement entrainé sur une base de d'apprentissage telle que la base d'apprentissage COCO.

Suivant un exemple de réalisation, le détecteur de point clef peut fournir 17 scores de confiance, chacun associé à un point clef.

Lors d'une étape 208 un score de confiance, noté $CS_i$, est calculé pour l'image $IM_i$ en fonction du score de confiance calculé pour chaque point clef à l'étape 206. Par exemple, le score de confiance $CS_i$ de l'image $IM_i$ peut être calculée suivant la formule suivante :

$$CS_i = \frac{\sum_{j=1}^{k} a_j \, m_j}{\sum_{j=1}^{k} a_j}$$

avec :

- $m_j$ le score de confiance calculé pour le point clef j, parmi k points clefs, avec k≥1, par exemple k=17 ; et
- $a_j$ un coefficient de pondération prédéterminé pour le point clef j.

L'utilisation de coefficients de pondération associés aux points clefs permet d'accorder des poids différents aux points clefs. En effet, dans le cadre de la ré-identification, il est bien connu que certaines zones de la silhouette sont plus importantes que d'autre pour la ré-identification telles que les yau, le nez, etc.

L'étape 200 comprend une étape 210 de calcul d'un score de qualité, noté $QS_i$, pour l'image $IM_i$ en fonction d'une part du score de netteté calculé à l'étape 202 et d'autre part du score de confiance calculé à l'étape 204. Par exemple, le score de qualité peut être calculé suivant la formule suivante :

$$QS_i = \frac{\sum_{j=1}^{k} a_j \, m_j}{\sum_{j=1}^{k} a_j} + log_{10}(1 + S_i)$$

Tel qu'indiqué plus haut, le score de qualité donne une indication concernant l'intérêt de l'image pour la ré-identification. Lorsqu'il est trop faible, cela témoigne du fait que l'image ne contient pas suffisamment d'information utilisable pour la ré-identification.

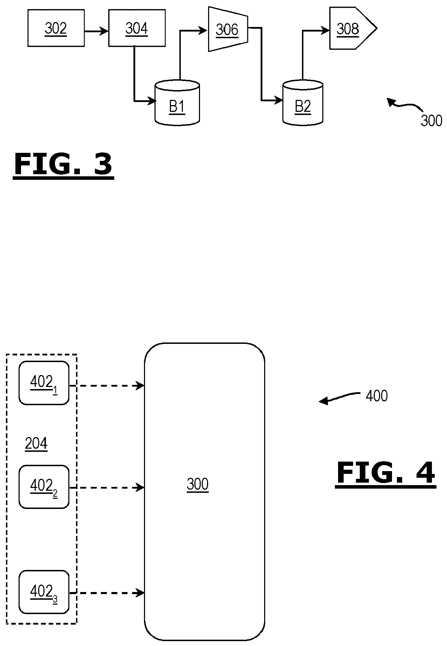

La FIGURE 3 est une représentation schématique d'un exemple de réalisation non limitatif d'un dispositif de ré-identification selon l'invention.

Le dispositif de ré-identification 300 peut être utilisé pour mettre en oeuvre un procédé de ré-identification selon l'invention et en particulier le procédé 100 de la FIGURE 1.

Le dispositif 300 de la FIGURE 3 peut être utilisé pour la ré-identification d'objets ou de personnes sur des images. On considère dans la suite que la ré-identification concerne des personnes, sans perte de généralité.

Le dispositif 300 comprend au moins un module 302 d'extraction d'images sources à partir d'un flux d'images reçu d'une caméra.

Le dispositif 300 comprend au moins un détecteur 304 de zones d'image comprenant chacune au moins une personne, tel que par exemple un détecteur de YOLOV5. Ces zones d'image sont mémorisées en tant qu'image à traiter dans une base d'images B1.

Le dispositif 300 comprend un module 306 de filtrage des images, c'est-à-dire des zones de personnes, mémorisées dans la base d'image B1. Ce module de filtrage 306 peut par exemple mettre en oeuvre l'étape de filtrage 108 de la FIGURE 1. Les images conservées par le module de filtrage 306 sont mémorisées dans une base d'image B2 et sont utilisées pour la ré-identification de personnes dans un module 308 de ré-identification du dispositif 300.

Au moins un des modules 302-308 peut être un module indépendant des autres modules 302-308. Au moins deux des modules 302-308 peuvent être intégrés au sein d'un même module

Chaque module 302-308 peut être un module hardware ou un module software, tel qu'une application ou un programme d'ordinateur, exécuté par un composant électronique de type processeur, puce électronique, calculateur, etc.

La FIGURE 4 est une représentation schématique d'un exemple de réalisation non limitatif d'un système de ré-identification selon l'invention.

Le système de ré-identification 400 peut être utilisé pour mettre en oeuvre un procédé de ré-identification selon l'invention, et en particulier le procédé 100 de la FIGURE 1.

Le système 400 est utilisé pour la ré-identification d'objets de tout type, et en particulier de personnes, à partir d'au moins un flux vidéo provenant de K caméras $402_1$-$402_K$ dudit système, distribuées dans l'espace et formant un réseau 404 de caméras, avec K≥1. Dans l'exemple représenté, et de manière nullement limitative K=3.

Le système 400 comprend en outre un dispositif de ré-identification selon l'invention, tel que par exemple le dispositif 300 de la FIGURE 3, pour analyser le flux vidéo acquis par chaque caméra $402_i$.

Le dispositif 300 peut être local aux caméras $402_1$-$402_3$ ou distant des caméras $402_1$-$402_3$.

Le dispositif 300 peut être relié à chacune des caméras $402_1$-$402_3$ par une connexion filaire ou sans fil.

Le flux transmis par chaque caméra $402_i$ peut être traité individuellement par le dispositif 300, et particulier par les modules 302-306, en vue d'alimenter la base d'images B2 commune à toutes les caméras et qui est utilisé pour la ré-identification.

Bien entendu l'invention n'est pas limitée aux exemples qui viennent d'être décrits. Par exemple, le nombre des caméras n'est pas limité à 3. De plus, le nombre d'images ou la durée des flux vidéo sont donnés à titre d'exemple seulement, sans perte de généralité.

## Revendications

**1.** Procédé (100) de ré-identification d'objet(s) sur des images prises par au moins une caméra ($402_1$-$402_3$), ledit procédé (100) comprenant :

 - une phase (108) de filtrage desdites images comprenant les étapes suivantes :

  ▪ calcul (110;200) d'un score de qualité ($QS_i$) pour chaque image,
  ▪ conservation (112) de chaque image dont le score satisfait un seuil de qualité prédéterminé ; et

 - une phase (114) de ré-identification d'objet(s) sur les images conservées lors de ladite phase de filtrage.

**2.** Procédé (100) selon la revendication précédente, **caractérisé en ce que**, pour au moins une image, l'étape (110;200) de calcul de score de qualité comprend un calcul (202) d'un score de netteté ($SS_i$) en fonction de la netteté de ladite image, le score de qualité ($QS_i$) de l'image étant fonction dudit score de netteté ($SS_i$).

**3.** Procédé (100) selon la revendication précédente, **caractérisé en ce que**, pour au moins une image, le score de netteté ($SS_i$) correspond à, ou est fonction de, une moyenne des normes du gradient de ladite image.

**4.** Procédé (100) selon l'une quelconque des revendications précédentes, **caractérisé en ce que**, pour au moins une image, l'étape (110;200) de calcul de score de qualité ($QS_i$) comprend un calcul (204) d'un score de confiance ($CS_i$) basé sur une visibilité, dans ladite image, de point(s) clef(s) visuels, le score de qualité ($QS_i$) de l'image étant fonction dudit score de confiance ($CS_i$).

**5.** Procédé (100) selon la revendication précédente, **caractérisé en ce que**, pour au moins une image, la détection d'au moins un point clef est réalisée par un détecteur de point(s) clef(s) préalablement entrainé.

**6.** Procédé (100) selon l'une quelconque des revendications 4 ou 5, **caractérisé en ce qu'**au moins un point clef correspond à une partie de la silhouette, ou de la forme, de l'objet concerné par la ré-identification.

**7.** Procédé (100) selon l'une quelconque des revendications précédentes, **caractérisé en ce qu'**au moins une image peut correspondre à une zone d'une image source, comprenant un objet et extraite de ladite image source lors d'une étape (106) de détection réalisée préalablement à la phase de filtrage (108).

**8.** Procédé (100) selon l'une quelconque des revendications précédentes, **caractérisé en ce que** la phase de ré-identification (114) comprend les étapes suivantes, pour au moins une image :

 - calcul (116), par un générateur de signature préalablement entrainé, d'une signature pour ladite image,
 - calcul (118) d'une distance entre ladite signature et une signature d'au moins une autre image, et
 - comparaison (120) de ladite distance à un seuil de ré-identification pour déterminer si lesdites images comprennent le même objet.

**9.** Procédé (100) selon l'une quelconque des revendications précédentes appliqué à la ré-identification de personnes.

**10.** Programme d'ordinateur comprenant des instructions exécutables qui, lorsqu'elles sont exécutées par un appareil informatique, mettent en en oeuvre toutes les étapes du procédé (100) selon l'une quelconque des revendications précédentes.

**11.** Dispositif (300) de ré-identification d'objets sur des images prises par plusieurs caméras comprenant des moyens configurés pour mettre en oeuvre toutes les étapes du procédé (100) selon l'une quelconque des revendications 1 à 9.

**12.** Système (400) de ré-identification d'objet comprenant :

 - au moins une caméra ($402_1$-$402_3$) pour prendre des images, et
 - un dispositif (300) selon la revendication précédente pour ré-identifier des objets sur les images prises par ladite au moins une caméra.

100

| Acquisition d'au moins un flux vidéo par au moins une caméra de la paire de caméras | 102 |

↓

| Pour chaque flux vidéo : extraction de plusieurs images sources dudit flux vidéo acquis | 104 |

↓

| Pour chaque image source : extraction et mémorisation, en tant qu'image, d'au moins une zone d'image comprenant une personne | 106 |

↓

110

| Pour chaque image : calcul d'un score de qualité |

$\downarrow QS_i$

108

| Conservation ou non de l'image en fonction de son score de qualité | 112 |

↓

116

| Pour chaque image : calcul d'une signature de l'image |

↓

114

| Calcul d'une distance entre la signature de cette image et la signature d'une autre image | 118 |

↓

| Comparaison de la distance à un seuil de ré-identification | 120 |

## FIG. 1

200

| Calcul d'un score de netteté, $SS_i$, pour l'image | 202 |

$\downarrow SS_i$

206

| Pour chaque point clef : calcul d'un score de confiance |

↓

204

| Calcul d'un score de confiance, $CS_i$, pour l'image | 208 |

## FIG. 2

$\downarrow CS_i$

| Calcul d'un score de qualité pour l'image | 210 |

$\downarrow QS_i$

| 302 | → | 304 | → | 306 | → | 308 |

B1

B2

300

# FIG. 3

204

402₁ ⇢

402₂ ⇢ 300

402₃ ⇢

400

# FIG. 4

Europäisches
Patentamt

European
Patent Office

Office européen
des brevets

**RAPPORT DE RECHERCHE EUROPEENNE**

Numéro de la demande

**EP 21 30 6790**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | NIKITIN M ET AL: "Face Quality Assessment for Face Verification in Video", GRAPHICON, COMPUTER GRAPHICS IN RUSSIA, [Online] 30 septembre 2014 (2014-09-30), − 3 octobre 2014 (2014-10-03), XP055921665, * le document en entier * ───── | 1-12 | INV. G06V10/82 G06V20/52 G06V40/16 G06V10/74 G06V10/98 |
| X | US 2021/142149 A1 (SKANS MARKUS [SE] ET AL) 13 mai 2021 (2021-05-13) * figure 1 * * alinéa [0025] − alinéa [0045] * * alinéa [0078] − alinéa [0115] * ───── | 1-12 | |
| A | SRIVASTAVA ANURAG KUMAR ET AL: "Cumulative Gradient Based Image Sharpness Evaluation  Algorithm For Auto Focus Control of Thermal Imagers", 12TH INTERNATIONAL CONFERENCE ON QUANTITATIVE INFRARED THERMOGRAPHY, 6 juillet 2015 (2015-07-06), XP055921298, DOI: https://dx.doi.org/10.21611/qirt.2015.0070 * 2. Sharpness Evaluation Algorithm * ───── | 2,3 | DOMAINES TECHNIQUES RECHERCHES (IPC) G06V |

Le présent rapport a été établi pour toutes les revendications

| Lieu de la recherche | Date d'achèvement de la recherche | Examinateur |
|---|---|---|
| La Haye | 16 mai 2022 | de Bont, Emma |

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 21 30 6790

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

16-05-2022

| Document brevet cité au rapport de recherche | Date de publication | Membre(s) de la famille de brevet(s) | Date de publication |
|---|---|---|---|
| US 2021142149 A1 | 13-05-2021 | CN 112784669 A | 11-05-2021 |
| | | EP 3819812 A1 | 12-05-2021 |
| | | JP 2021089717 A | 10-06-2021 |
| | | US 2021142149 A1 | 13-05-2021 |

EPO FORM P0460

Pour tout renseignement concernant cette annexe : voir Journal Officiel de l'Office européen des brevets, No.12/82